(19) Europäisches Patentamt
European Patent Office
Office européen des brevets

(11) Numéro de publication: **0 324 963 B1**

(12) **FASCICULE DE BREVET EUROPEEN**

(45) Date de publication de fascicule du brevet: **24.06.92**

(51) Int. Cl.⁵: **C22B 3/00**, C01G 15/00

(21) Numéro de dépôt: **88121354.0**

(22) Date de dépôt: **21.12.88**

# (54) Procédé d'extraction de métal.

(30) Priorité: **18.01.88 LU 87108**

(43) Date de publication de la demande: **26.07.89 Bulletin 89/30**

(45) Mention de la délivrance du brevet: **24.06.92 Bulletin 92/26**

(84) Etats contractants désignés: **AT BE DE ES FR GB IT NL SE**

(56) Documents cités:
**US-A- 4 541 861**
**US-A- 4 568 526**
**US-A- 4 631 177**

**HYDROMETALLURGY, vol. 5, no. 2,3, février 1980, pages 149-160, Elsevier, Amsterdam, NL; G. COTE et al.: "Liquid-liquid extraction of Germanium with oxine derivatives"**

**JOURNAL OF INORGANIC NUCLEAR CHEMISTRY, vol. 41, 1979, pages 1353-1363, Pergamon Press Ltd, GB; B. MARCHON et al.: "Some typical behaviours of the beta-dodecenyl 8-hydroxyquinoline through its reactions with Germanium (IV)"**

**CIM Bulletin, Février 1975, pages 99-104, Ashland Chemicals, Technical Bulletin 1241, 1971**

(73) Titulaire: **ACEC-Union Minière, société anonyme dite : avenue Emile Rousseau B-6001 Marcinelle (Charleroi)(BE)**

(72) Inventeur: **De Schepper, Achille J.M. Esdoornlaan 8 B-2451 Lichtaart(BE)**
Inventeur: **Haesebroek, Guy G.L.B. Floris Decuijperstraat 12 B-2510 Mortsel(BE)**
Inventeur: **van Peteghem, Antoine L. Leemanslaan 21 B-2430 Olen(BE)**

(74) Mandataire: **Saelemaekers, Juul et al c/o MHO Division de S.A ACEC-Union Minière N.V. Adolf Greinerstraat 14 B-2660 Hoboken(BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

La présente invention se rapporte à un procédé pour séparer un métal, qui forme un complexe avec de la 8-hydroxyquinoléine, d'une solution aqueuse contenant ledit métal, comprenant les étapes suivantes:

(a) la mise en contact de la solution aqueuse avec une phase organique liquide ou solide contenant un agent d'extraction, qui est composé d'une part d'un composant actif constitué d'une 8-hydroxyquinoléine substituée ou d'un mélange de 8-hydroxyquinoléines substituées et d'autre part de sous-produits de la fabrication dudit agent d'extraction, la mise en contact étant effectuée à un pH tel qu'au moins une partie dudit métal soit transférée de la solution aqueuse dans la phase organique, en produisant ainsi une solution aqueuse appauvrie en ledit métal et une phase organique chargée dudit métal;

b) la séparation de la solution aqueuse appauvrie en ledit métal de la phase organique chargée dudit métal;

(c) la récupération dudit métal de la phase organique chargée; et

(d) la réutilisation dans l'étape (a) de la phase organique, qui a été déchargée dans l'étape (c).

Un tel procédé a déjà été décrit dans les références suivantes:

(1) US-A-3637711 déposé le 25.03.68

(2) US-A-3971843 avec première priorité du 12.07.74

(3) CA-A-1061574 avec priorité du 21.08.74

(4) US-A-4102976 avec première priorité du 1.04.75

(5) GB-A-1593289 avec priorité du 27.09.76

(6) US-A-4169130 avec priorité du 13.07.77

(7) "The recovery of gallium from Bayer process aluminate solutions by liquid-liquid extraction" par A. Leveque et al. dans Proceedings of the International Solvent Extraction Conference ISEC 77, Toronto, 9-16 September 1977, Volume 2, pp. 439-442

(8) US-A-4241029 avec priorité du 15.12.77

(9) "Liquid-Liquid extraction of germanium with oxine derivates" par G. Cote et D. Bauer dans Hydrometallurgy, 5, (1980) 149-160

(10) US-A-4389379 déposé le 15.08.80

(11) US-A-4432951 avec priorité du 22.06.81

(12) US-A-4568526 déposé le 4.01.82

(13) US-A-4485076 avec priorité du 26.08.82

(14) US-A-4559203 avec priorité du 26.08.82

(15) EP-A-143749 avec priorité du 29.11.83

(16) US-A-4654145 avec priorité du 7.06.84

(17) US-A-4541861 déposé le 13.09.84

(18) EP-A-199905 avec priorité du 7.03.85

(19) US-A-4631177 déposé le 2.07.85

(20) "Extraction of uranium by a supported liquid membrane containing mobile carrier" par K. Akiba et al. dans Talanta, vol. 32, No 8B, pp. 824-826, 1985

(21) "Solvent extraction in precious metals refining" par G.P. Demopoulos dans Journal of Metals, Juin 1986, pp. 13-17

(22) "A novel solvent extraction system for the refining of precious metals" par G.P. Demopoulos et al. dans ISEC '86 International Solvent Extraction Conference - München, 11-16 September 1986, Preprints Vol. II, pp II-581 - II-588

Les métaux suivants sont séparés de la solution aqueuse :

- antimoine dans la référence (4)
- cadmium dans la référence (1)
- cobalt dans les références (3) et (17)
- cuivre dans les références (1), (3) et (17)
- gallium dans les références (2), (5) à (8), (13) à (16), (18) et (19)
- germanium dans les références (9) à (12) et (18)
- or dans les références (16), (21) et (22)
- indium dans la référence (18)
- molybdène dans la référence (3)
- nickel dans la référence (17)
- palladium dans les références (16), (21) et (22)
- platine dans les références (16), (21) et (22)
- uranium dans la référence (20)

- zinc dans les références (1) et (3)

L'agent d'extraction est contenu dans une phase organique liquide dans les références (1) à (18), (21) et (22). Il est noyé dans ou supporté par une phase organique solide dans les références (12), (19) et (20).

Le métal est récupéré de la phase organique chargée par la mise en contact de cette dernière avec une solution aqueuse de ré-extraction ou d'élution dans les références (1) à (16) et (18) à (22). Dans les références (16) et (17) le métal est récupéré de la phase organique chargée par traitement de cette dernière avec un agent réducteur gazeux.

La phase organique, qui a été déchargée dans l'étape (c), est recyclée vers l'étape (a) soit directement comme par exemple dans la référence (1), soit après un conditionnement préalable comme par exemple dans les références (2) et (11). Ce conditionnement préalable consiste par exemple en lavage avec de l'eau, lorsque l'étape (c) a été effectuée avec une solution acide (référence (2)), ou en un lavage avec une solution acide, lorsque l'étape (c) a été effectuée avec une solution alcaline (référence (11)).

Le produit, commercialisé sous la marque déposée KELEX 100 par Sherex Chemical Company et Schering AG (antérieurement par Ashland Chemical Co.) est utilisé comme agent d'extraction dans les références (2) à (4), (7), (9) à (12) et (15) à (21).

Avant 1976 le composant actif de KELEX 100 était une bêta-alcénylhydroxy-8 quinoléine de formule

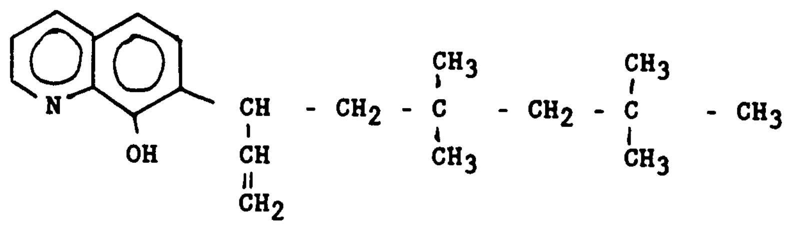

nommée 7-[3-(5,5,7,7-tétraméthyl-1-octényl)]-8-hydroxyquinoléine ou 7-(1-vinyl-3,3,5,5-tétraméthylhexyl)-8-hydroxyquinoléine.

A cette époque KELEX 100 était composé d'approximativement 77,7 % (en poids) du composant actif et de 3,7 % de 8-hydroxyquinoléine, le reste étant des sous-produits de la fabrication de KELEX 100.

Depuis 1976 le composant actif de KELEX 100 est une alkylhydroxy-8 quinoléine de formule

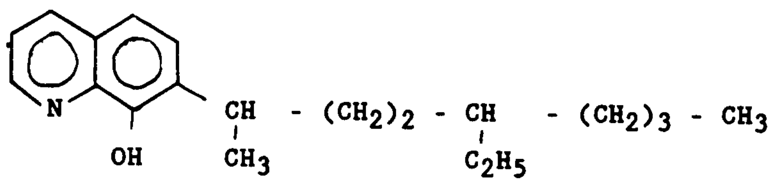

nommée 7-(4-éthyl-1-méthyloctyl)-8-hydroxyquinoléine.

Le KELEX 100 "post-1975" est composé de 82 % du composant actif et de 0,5 % de 8-hydroxyquinoléine, la solde étant constituée de divers sous-produits de la fabrication (voir : "On the structure and composition of KELEX 100" par G.P. Demopoulos et al. dans Hydrometallurgy, 11, 1983, pp. 389-396; voir également la référence (17), col. 4, 1. 11-31).

Un produit à base d'une quinoléine, ayant la même formule que la quinoléine présente dans du KELEX 100 "pré-1976", est utilisé comme agent d'extraction dans la référence (1). On doit admettre que ce produit est du KELEX 100 "pré-1976", puisque la référence (1) est le brevet de base sur KELEX 100.

Un produit à base d'une quinoléine ayant la même composition que la quinoléine présente dans du KELEX 100 "post-1976", est utilisé comme agent d'extraction dans les références (5) et (6). L'origine de ce produit n'est pas mentionné.

Les références (8), (13) et (14) font état d'une formule générale couvrant notamment la quinoléine présente dans du KELEX 100 "pré-1976" et celle présente dans du KELEX 100 "post-1975".

Le produit, commercialisé sous la marque déposée LIX 26 par Henkel Corporation, est utilisé comme agent d'extraction dans les références (11), (16), (18), (21) et (22).

Il n'y a que peu de détails disponibles sur la composition de LIX 26. Selon G.P. Demopoulos et al., LIX 26

est une 8-hydroxyquinoléine substituée en position 7 qui consiste en un mélange complexe d'isomères d'alkyl ramifiés avec une ou deux liaisons insaturées dans la chaîne latérale alkyl, $C_{11}H_{22}$ et $C_{12}H_{24}$ étant les chaînes latérales les plus abondamment trouvées dans LIX 26 (voir référence (22)). Le composant actif de LIX 26 est donc un mélange de 8-hydroxyquinoléines substituées par des groupes alcényl dans la position 7. Il n'y a pas de raison pour croire que le LIX 26 aurait un pourcentage plus élevé de composant actif que le KELEX 100.

Dans tous les références qui utilisent le réactif KELEX 100 et/ou LIX 26 en tant qu'agent d'extraction dans le procédé de séparation de métal tel que défini ci-dessus, le réactif a été mis en oeuvre tel que reçu du fabricant, sauf dans les références (7) et (20) où le KELEX 100 a d'abord été lavé avec une solution de HCl pour éliminer la 8-hydroxyquinoléine libre.

La conclusion de ce qui précède est que l'on a toujours utilisé ou suggéré d'utiliser dans le procédé de séparation de métal tel que défini ci-dessus un agent d'extraction ayant un pourcentage de composant actif qui est substantiellement inférieur à 90 %.

Les procédés de l'art antérieur décrits dans les références (1) à (22) présentent au moins un des inconvénients suivants :

- l'agent d'extraction dégénère rapidement, particulièrement lorsque son composant actif a une chaîne latérale insaturée et que l'étape (a) ou (c) est effectuée en milieu alcalin (voir la référence (5) et WO 82/01369); même si le composant actif a une chaîne latérale saturée, la dégénération reste substantielle (voir la référence (6));
- le transfert du métal entre la solution aqueuse et la phase organique à l'étape (a) et entre la phase organique chargée et la solution aqueuse de ré-extraction (si utilisée) à l'étape (c) se produit lentement, particulièrement lorsque la solution aqueuse est une solution alcaline, à moins qu'ou bien la mise en contact soit effectuée à une température supérieure comme dans les références (1), (2), (10), (11) et (12), ou bien la phase organique contienne des additifs spéciaux tels que des acides carboxyliques, des organosulfates et des composés organophosphorés comme dans les références (8), (13), (14) et (15) pour améliorer la cinétique;
- lorsqu'une phase organique liquide est utilisée à l'étape (a), la séparation de la solution aqueuse appauvrie en métal d'avec la phase organique chargée de métal, c'est-à-dire l'étape (b), est difficile;
- lorsqu'on sépare du Pt (IV) d'une solution de chlorure avec une phase organique contenant du KELEX comme agent d'extraction, il est nécessaire d'opérer à une température élevée ( 65 °C) pour éviter la précipitation du complexe Kelex-Pt (IV) relativement insoluble (voir la référence (22)).

Le but de la présente invention est de fournir un procédé tel que défini ci-dessus, qui évite les inconvénients des procédés de l'art antérieur.

A cet effet, on utilise selon l'invention un agent d'extraction qui contient au moins 90 % en poids du composant actif.

En effet, il a été trouvé que, lorsqu'on utilise un tel agent d'extraction, la vitesse de dégénération de l'agent d'extraction est substantiellement réduite, la cinétique d'extraction et de ré-extraction est améliorée, la séparation des phases est plus facile et il n'y a pas de problème de précipitation avec Pt (IV).

Il est à noter ici que dans la référence (10), colonne 5, lignes 23-36, est rapporté ce qui suit :

"La vitesse de l'extraction dépend de la concentration en extractant et de la concentration en germanium. Pour déterminer la vitesse totale d'extraction, des tests ont été réalisés avec la même concentration en $\beta$oxH d'une part et en Ge (IV) d'autre part, mais à des pH différents. La concentration en $\beta$oxH était de 200 g/l, et celle de Ge (IV) était de 1,0 g/l. Dans un premier essai, le pH était très acide, puisque le milieu contenait 0,5 M d'H2S04, et dans un deuxième essai, le pH était égal à 4. Dans le premier test (avec un Kelex commercial et 20 % d'octanol), plus de 50 % du germanium était extrait après 2 minutes seulement et, dans le deuxième essai, un temps de plus de 20 minutes était nécessaire pour l'extraction de 50 % du germanium (Kelex purifié par distillation donne une vitesse de réaction plus faible)".

Ce passage appelle les commentaires suivants. Il ne révèle pas le procédé de séparation de métal auquel la présente invention se rapporte; il ne révèle qu'une partie de celui-ci, à savoir l'étape d'extraction. Le pourcentage de composant actif du "Kelex purifié par distillation" n'est pas donné. Il à été trouvé que ce "Kelex purifié par distillation" donne une vitesse de réaction plus faible, tandis que la demanderesse a trouvé que la vitesse de reaction s'accroît lorsqu'on utilise un agent d'extraction avec une teneur plus élevée en composant actif (comme il sera démontré plus loin). Ceci pourrait s'expliquer par le fait que la distillation de Kelex ne mène pas nécessairement à un produit purifié ainsi qu'il apparaît de "Commercial chelating solvent extraction reagents. II. Purification and properties of beta-alkenyl-8-hydroxyquinoline" par A.W. Ashbrook dans Journal of Chromatography, 105 (1975), p. 151-156 (voir p. 154-5 : "Kelex se décompose avant de bouillir... La matière telle que reçue peut être distillée sous vide, mais une séparation de composants n'est pas obtenue par cette méthode."). Quoiqu'il en soit, le passage ci-dessus de la

référence (10) fait l'homme de la technique s'éloigner du procédé de la présente invention.

L'agent d'extraction à utiliser dans le procédé de la présente invention a, de préférence, une capacité standard de chargement de cuivre d'au moins 0,9 g de Cu/10 g d'agent d'extraction, ce qui veut dire que 1 litre d'une phase organique, préparé en partant de 50 g d'agent d'extraction, 250 ml isodécanol et kérosène comme solde, peut être chargé d'au moins 4,5 g Cu, lorsqu'il est mis en contact à 3 reprises avec 1 litre d'une solution de sulfate de cuivre à 21,6 g/l de CuSO4.5H2O, dont le pH a été préalablement ajusté à 4.

Le composant actif de l'agent d'extraction à utiliser dans le procédé de la présente invention peut être constitué d'au moins une des 8-hydroxyquinoléines substituées, dont la formule ou la formule générale a été divulguée dans les références (1) à (22) et WO 82/01369 . Les hydroxyquinoléines préférées ont la formule

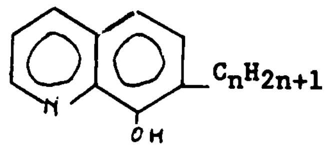

dans laquelle n est compris entre 5 et 15. Un représentant typique en est la 7-(4-éthyl-1-méthyloctyl)-8-hydroxyquinoléine, c'est-à-dire le composant actif de KELEX 100 "post-1975".

Si une phase organique liquide est utilisée à l'étape (a), on peut utiliser les mêmes diluants et agents modificateurs et, éventuellement, les mêmes additifs accélérateurs de réaction que dans les références (1) à (18), (21) et (22) pour former ensemble avec l'agent d'extraction la phase organique liquide.

Si une phase organique solide est utilisée à l'étape (a), on peut utiliser les mêmes méthodes que dans les références (12), (19) et (20) pour avoir l'agent d'extraction noyé dans ou supporté par un matériau organique solide poreux.

La mise en contact de la solution aqueuse avec la phase organique à l'étape (a) peut être effectuée dans les conditions de pH utilisées dans les références (1) à (22).

Le métal peut être récupéré de la phase organique chargée par les mêmes méthodes que dans les références (1) à (22).

On peut séparer deux ou plusieurs métaux à la fois d'une solution aqueuse contenant ces métaux, à condition d'effectuer l'étape (a) à un pH tel qu'au moins une partie de chacun de ces métaux soit tranférée de la solution aqueuse dans la phase organique. Ces métaux peuvent ensuite être récupérés séparement de la phase organique chargée, par exemple en utilisant à l'étape (c) successivement des solutions de réextraction de pH différent.

Les avantages du procédé de la présente invention sont illustrés par les exemples qui sont donnés plus loin.

Dans ces exemples 4 types d'agents d'extraction sont utilisés, qui ont le même composant actif que KELEX 100 "post-1975". Les 4 agents d'extraction ont été fournis par Schering AG et ils seront appelés ci-après : agent d'extraction A, agent d'extraction B, agent d'extraction C et agent d'extraction D.

On a trouvé par chromatographie en phase liquide (GLC) que l'agent d'extraction A a 98,1 % de composant actif. On a trouvé que sa capacité standard de chargement de cuivre, qui est également une mesure pour sa teneur en composant actif, s'élève à 1,04 g Cu/10 g d'agent d'extraction.

La capacité standard de chargement de cuivre est déterminée comme suit :

1) on prépare une phase organique composée de 50 g/l de l'agent d'extraction, 25 % en volume d'isodécanol et le reste Escaid 110 (kérosène)

2) la phase organique est lavée avec de l'acide sulfurique dilué à 200 g/l : la phase organique est agitée à 2 reprises pendant 2 minutes avec la solution d'acide sulfurique utilisant un rapport phase organique/phase aqueuse (O/A) égal à 1/1; après chaque étape on laisse l'émulsion se décanter et on sépare les phases

3) la phase organique est lavée à 2 reprises avec de l'eau déminéralisée utilisant une durée d'agitation de 2 minutes et un rapport O/A de 1/1; après chaque étape les phases sont séparées; après la seconde étape la phase organique est centrifugée pour en séparer les dernières traces de phase aqueuse

4) la phase organique est ensuite mise en contact trois fois de suite avec une solution de sulfate de cuivre à 21,6 g/l CuSO4.5H2O, dont le pH a été préalablement ajusté à 4 : la mise en contact est effectuée en agitant pendant 2 minutes avec un rapport O/A de 1/1; après chaque étape on laisse l'émulsion se décanter et on sépare les phases; après la troisième étape la phase organique est centrifugée pendant 10 minutes

5) 40 ml de la phase organique sont agités pendant 2 minutes avec 40 ml d'une solution d'acide

sulfurique à 200 g/l et le mélange est ensuite centrifugé
6) on détermine la concentration de cuivre dans un échantillon de la phase aqueuse
7) la capacité standard de chargement de cuivre de la phase organique, exprimée en g Cu/10 g d'agent d'extraction, est obtenue en divisant par 5 la concentration de cuivre mesurée dans la phase aqueuse acide (la phase organique contient 50 g d'agent d'extraction par litre).

Les agents d'extraction B, C et D avaient, selon Schering AG, une teneur en composant actif de respectivement 92 %, 84 % et 77 %. On a trouvé que leur capacité standard de chargement de cuivre s'élevaient à respectivement 0,97, 0,87 et 0,79 g Cu/10 g d'agent d'extraction.

Exemple 1

Dans cet exemple on examine la vitesse de dégénération des divers agents d'extraction en milieu alcalin.

Les essais sont effectués comme suit. 1 litre d'une phase organique (FO) contenant l'agent d'extraction à examiner est mélangé pendant un temps donné avec 1 litre d'une solution aqueuse alcaline, la phase organique ayant été alcalinisée au préalable en la mettant en contact pendant 2 minutes avec une solution alcaline ayant la même composition que celle utilisée dans l'essai. On débite de l'aire au-dessus du mélange à raison de 12 l/h et on maintient la température à 50 °C. La capacité de chargement de cuivre de la phase organique est déterminée au début et à la fin de l'essai. Avant de déterminer sa capacité de chargement de cuivre, on traite la phase organique par une solution de H2SO4 à 200 g/l pour en éliminer Na ou K et ensuite avec de l'eau pour en éliminer le H2SO4.

Les résultats suivants sont obtenus avec une solution de KOH à 60 g/l :

| Essai n° | Composition FO en % en vol. | Capacité de charg. de cuivre en g Cu/l FO | | |
|---|---|---|---|---|
| | | Initiale | Après 570 h de contact | Changement (en %) |
| 1 | 18.5 Ag. d'ex. D<br>25 Isodecanol<br>56.5 Escaid 110 | 14.5 | 12.8 | - 11.7 |
| 2 | 17.5 Ag. d'ex. C<br>25 Isodecanol<br>57.5 Escaid 110 | 15.2 | 14.0 | - 7.9 |
| 3 | 17 Ag. d'ex. A<br>25 Isodecanol<br>58 Escaid 110 | 17.7 | 17.8 | 0 |

Les résultats suivants sont obtenus avec une solution de NaOH à 60 g/l :

| Essai n° | Composition FO en % en vol. | Capacité de charg. de cuivre en g Cu/l FO | | |
|---|---|---|---|---|
| | | Initiale | Après 1000 h de contact | Changement (en %) |
| 4 | 9.9 Ag. d'ex. C<br>25 Isodecanol<br>61.5 Escaid 110 | 8.61 | 6.69 | - 22.3 |
| 5 | 9.9 Ag. d'ex. B<br>25 Isodecanol<br>65.1 Escaid 110 | 9.6 | 8.82 | - 8.1 |

Les résultats ci-dessus démontrent clairement que la vitesse de dégénération des agents d'extraction est substantiellement réduite, lorsqu'ils ont une teneur plus élevée en composant actif.

Exemple 2

Dans cet exemple on examine le comportement cinétique des agents d'extraction B, C et D dans l'extraction du gallium.

Dans un premier essai 1 volume d'une solution alcaline de gallium, contenant 9,9 g/l Ga et 57 g/l NaOH,

est mis en contact avec 2 volumes d'une phase organique composée de 15 % en volume de l'agent d'extraction B, 15 % en volume d'isodécanol et 70 % en volume d'Escaid 120 (kérosène); la température est maintenue à 55 °C et le rendement d'extraction (% du gallium transféré vers la phase organique) est déterminé après 2, 5 et 15 minutes.

Dans un deuxième et un troisième essai, qui sont effectués dans les mêmes conditions que le premier, l'agent d'extraction B est remplacée respectivement par l'agent d'extraction C et D.

Les résultats suivants sont obtenus :

| Essai n° | Agent d'extraction | Rendement d'extration (en %) | | |
|---|---|---|---|---|
| | | 2′ | 5′ | 15′ |
| 1 | B | 36.7 | 57.5 | 90.3 |
| 2 | C | 17.9 | 50.0 | 80.8 |
| 3 | D | 9.8 | 33.7 | 74.8 |

Ces résultats indiquent clairement que la cinétique de l'extraction du gallium est substantiellement améliorée, lorsque l'agent d'extraction a une teneur plus élevée en composant actif.

Exemple 3

Dans cet exemple on examine le comportement cinétique des agents d'extraction A, B et D dans l'extraction de l'antimoine.

Dans un premier essais 1 volume d'une solution acide d'antimoine, contenant 10,2 g/l Sb, 80 g/l As et 109 g/l H2SO4, est mis en contact avec 1,4 volume d'une phase organique composée de 18 % en volume de l'agent d'extraction A, 25 % en volume d'isodécanol et 57 % en volume d'Escaid 110, cette phase organique ayant été acidifiée au préalable par contact avec une solution H2SO4 à 120 g/l; la température est maintenue à 35 °C et le rendement d'extraction (% de l'antimoine transféré vers la phase organique) est déterminé après 1, 2 et 5 minutes.

Dans un deuxième et un troisième essai, qui sont effectués dans les mêmes conditions que le premier, l'agent d'extraction A est remplacé respectivement par l'agent d'extraction B et D.

Les résultats suivants sont obtenus :

| Essai n° | Agent d'extraction | Rendement d'extr. (en %) | | |
|---|---|---|---|---|
| | | 1′ | 2′ | 5′ |
| 1 | A | 70.5 | 70.5 | 71.5 |
| 2 | B | 65.6 | 67.7 | 69.6 |
| 3 | D | 60.8 | 64.7 | 67.7 |

Les résultats indiquent clairement que la cinétique de l'extraction de l'antimoine est substantiellement améliorée, lorsque l'agent d'extraction a une teneur plus élevée en composant actif.

Exemple 4

Dans cet exemple on examine le comportement cinétique des agents d'extraction A, B et D dans l'extraction du germanium.

Dans un premier essai 1 volume d'une solution acide de germanium, contenant 0,74 g/l Ge et 120 g/l H2SO4, est mis en contact avec 0,5 volume d'une phase organique composée de 10 % en volume de l'agent d'extraction A, 25 % en volume d'isodécanol et 65 % en volume d'Escaid 110, cette phase organique ayant été acidifiée au préalable par contact avec une solution de H2SO4 à 120 g/l; la température est maintenue à 35 °C et le rendement d'extraction (% du germanium transféré vers la phase organique) est déterminé après 1, 2 et 5 minutes.

Dans un deuxième et un troisième essai, qui sont effectués dans les mêmes conditions que le premier, l'agent d'extraction A est remplacé respectivement par l'agent d'extraction B et D.

Les résultats suivants sont obtenus :

| Essai n° | Agent d'extraction | Rendement d'extr. (en %) | | |
|---|---|---|---|---|
| | | 1′ | 2′ | 5′ |
| 1 | A | 95.9 | 98.5 | 99.7 |
| 2 | B | 95.2 | 98.4 | 99.6 |
| 3 | D | 92.1 | 96.7 | 99 |

Ces résultats montrent que la cinétique de l'extraction du germanium est améliorée, lorsque l'agent d'extraction a une teneur plus élevée en composant actif.

Exemple 5

Dans cet exemple on examine le comportement décantation de phases organiques contenant les agents d'extraction B, C et D.

Dans un premier essai 1 volume d'une solution alcaline de gallium, contenant 9,9 g/l Ga et 57 g/l NaOH, est mélangé pendant 30 minutes avec 2 volumes d'une phase organique composée de 15 % en volume de l'agent d'extraction B, 15 % en volume d'isodécanol et 70 % en volume d'Escaid 120, la température étant maintenue à 55 °C, et ensuite le temps de décantation est déterminé ainsi que la concentration de gallium dans la phase organique décantée.

Dans un deuxième et un troisième essai, qui sont effectués dans les mêmes conditions que le premier, l'agent d'extraction B est remplacé respectivement par l'agent d'extraction C et D.

Les résultats suivants sont obtenus :

| Essai n° | Agent d'extr. | Temps de décantation | [Ga]FO en g/l |
|---|---|---|---|
| 1 | B | 1′58″ | 4.898 |
| 2 | C | 2′36″ | 4.597 |
| 3 | D | 4′34″ | 4.520 |

Ces essais démontrent clairement que la durée de décantation est substantiellement réduite, lorsque l'agent d'extraction a un pourcentage plus élevé de composant actif.

Exemple 6

Cet exemple se rapport à l'extraction de platine et de palladium avec l'agent d'extraction B et l'agent d'extraction D.

Dans un premier essai 1 volume d'une solution de HCl 3N contenant 51,6 g/l Pd et 12,1 g/l Pt est mélangé à 20 °C pendant 10 minutes avec 5 volumes d'une phase organique composée de 20 % en volume de l'agent d'extraction B, 25 % en volume d'isodecanol et 55 % en volume d'Escaid 120, cette phase organique ayant été acidifiée au préalable par contact avec HCl 3N. Ensuite on laisse les phases se décanter. La décantation est complète après 13 minutes; les phases sont exemptes de toute précipité. On trouve que la phase aqueuse contient 3,935 g/l Pd et 0,116 g/l Pt, et la phase organique 9,590 g/l Pd et 2,420 g/l Pt. Le coefficient de distribution est donc 2,437 pour Pd et 20,86 pour Pt. Le platine peut être réextrait de la phase organique par de l'eau, et le palladium par du HCl 6 à 8N.

Dans un second essai 1 volume d'une solution acide ayant la même composition que celle utilisée dans le premier essai est mélangé à 20 °C avec 5 volumes d'une phase organique composée de 20 % en volume de l'agent d'extraction D, 25 % en volume d'isodécanol et 55 % en volume d'Escaid 120, acidifiée au préalable. Très vite il y a formation dans le mélange d'un précipité brunâtre, ce qui signifie que la phase organique ne convient pas pour l'extraction simultanée de Pd et Pt de solutions de HCl. Une analyse du précipité humide montre que celui-ci contient environ 10 % Pt et 0,5 % Pd.

Le procédé de la présente invention est très utile, lorsque le métal doit être séparé d'une solution alcaline, plus particulièrement d'une solution dont le pH est supérieur à 13; il est donc particulièrement intéressant pour extraire le gallium contenu dans les lessives d'aluminate de sodium du procédé Bayer de

fabrication de l'alumine. Le procédé de l'invention est également très utile, lorsque le métal doit être récupéré à l'étape (c) de la phase organique à l'aide d'une solution alcaline, plus particulièrement à l'aide d'une solution dont le pH est supérieur à 13, ce qui est le cas avec le germanium et l'antimoine. Il est également très utile pour récupérer des métaux de valeur tel que l'indium.
Il est, en outre, très utile pour séparer des métaux précieux, plus particulièrement le platine, parce qu'il permet d'opérer à la température ambiante avec un agent d'extraction, dont le composant actif possède une chaîne latérale saturée; un tel agent d'extraction dégénère beaucoup moins vite qu'un agent d'extraction, dont le composant actif a une chaîne latérale insaturée.

Il est évident que sous l'expression "un agent d'extraction, qui est composé d'une part d'un composant actif constitué d'une 8-hydroxyquinoléine substituée ou d'un mélange de 8-hydroxyquinoléines substituées et d'autre part de sous-produits de la fabrication dudit agent d'extraction", utilisée ci-dessus et dans les revendications, est entendu un réactif qui n'a pas encore été dilué après qu'il a été synthétisé (p.ex. par réaction de 8-hydroxyquinoléine avec un agent de substitution) et affiné, puisque des diluants ajoutés après le stade d'affinage ne sont pas des sous-produits de la fabrication du réactif.

## Revendications

1. Procédé pour séparer un métal, qui forme un complexe avec de la 8-hydroxyquinoléine, d'une solution aqueuse contenant ledit métal, comprenant les étapes suivantes:
   (a) la mise en contact de la solution aqueuse avec une phase organique liquide ou solide contenant un agent d'extraction, qui est composé d'une part d'un composant actif constitué d'une 8-hydroxyquinoléine substituée ou d'un mélange de 8-hydroxyquinoléines substituées et d'autre part de sous-produits de la fabrication dudit agent d'extraction, la mise en contact étant effectuée à un pH tel qu'au moins une partie dudit métal soit transférée de la solution aqueuse dans la phase organique, en produisant ainsi une solution aqueuse appauvrie en ledit métal et une phase organique chargée dudit métal;
   (b) la séparation de la solution aqueuse appauvrie en ledit métal de la phase organique chargée dudit métal;
   (c) la récupération dudit métal de la phase organique chargée; et
   (d) la réutilisation dans l'étape (a) de la phase organique, qui a été déchargée dans l'étape (c);
   ce procédé étant caractérisé en ce que l'agent d'extraction contient au moins 90 % en poids du composant actif.

2. Procédé selon la revendication 1, caractérisé en ce que l'agent d'extraction a une capacité standard de chargement de cuivre d'au moins 0,9 g Cu/10 g d'agent d'extraction, ce qui veut dire que 1 litre de phase organique, préparé en diluant 50 g d'agent d'extraction et 250 ml d'isodécanol dans du kérosène et lavé d'abord à 2 reprises pendant 2 minutes avec 1 litre d'acide sulfurique à 200 g/l et ensuite à 2 reprises pendant 2 minutes avec 1 litre d'eau déminéralisée, est chargé d'au moins 4,5 g Cu, lorsqu'il est mis en contact à 3 reprises pendant 2 minutes avec 1 litre d'une solution de sulfate de cuivre à 21,6 g/l de $CuSO_4.5H_2O$, dont le pH a été préalablement ajusté à 4.

3. Procédé selon la revendication 1 ou 2, caractérisé en ce que la (les) 8-hydroxyquinoléine(s) substituée(s) a (ont) la formule

   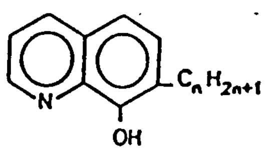

   dans laquelle n est compris entre 5 et 15.

4. Procédé selon la revendication 1, 2 ou 3, caractérisé en ce que l'étape (a) est effectuée en milieu alcalin.

5. Procédé selon la revendication 4, caractérisé en ce que l'étape (a) est effectué à un pH au-dessus de 13.

**6.** Procédé selon la revendication 1, 2 ou 3, caractérisé en ce que l'étape (c) est effectuée en milieu alcalin.

**7.** Procédé selon la revendication 6, caractérisé en ce que l'étape (c) est effectuée à un pH au-dessus de 13.

**8.** Procédé selon les revendications 1 à 5, caractérisé en ce que le métal est du gallium.

**9.** Procédé selon les revendications 1 à 3 et 5-6, caractérisé en ce que le métal est du germanium ou de l'antimoine.

**10.** Procédé selon les revendications 1 à 3, caractérisé en ce que le métal est de l'indium ou du platine.

**Claims**

**1.** A process for separating a metal, that forms a complex with 8-hydroxyquinoline, from an aqueous solution containing said metal, comprising the steps of

(a) contacting the aqueous solution with a liquid or solid organic phase containing an extractant, that consists on the one hand of an active component being either a substituted 8-hydroxyquinoline or a mixture of substituted 8-hydroxyquinolines and on the other hand of by-products of the manufacture of said extractant, the contacting being carried out at such a pH that at least part of said metal is transferred from the aqueous solution into the organic phase, whereby producing an aqueous solution depleted in said metal and an organic phase loaded with said metal;

(b) separating the aqueous solution depleted in said metal from the organic phase loaded with said metal;

(c) recovering said metal from the loaded organic phase; and

(d) re-using in step (a) the organic phase that has been unloaded in step (c),

said process being characterized in that the extractant contains at least 90 wt % of the active component.

**2.** A process according to claim 1, characterized in that the extractant has a standard copper loading capacity of at least 0.9 g Cu/10 g extractant, what means that 1 litre of organic phase, which is prepared by diluting 50 g extractant and 250 ml isodecanol with kerosene and washed firstly twice for 2 minutes with 1 litre sulphuric acid of 200 g/l and subsequently twice for 2 minutes with 1 litre demineralized water, is loaded with at least 4.5 g Cu, when it is contacted three times for 2 minutes with 1 litre copper sulphate solution of 21.6 g/l $CuSO_4.5H_2O$, the pH of which has been previously adjusted to 4.

**3.** A process according to claim 1 or 2, characterized in that the substituted 8-hydroxyquinoline(s) has(ve) the formula

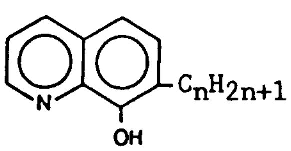

wherein n is comprised between 5 and 15.

**4.** A process according to claim 1, 2 or 3, characterized in that step (a) is carried out in an alkaline medium.

**5.** A process according to claim 4, characterized in that step (a) is carried out at a pH above 13.

**6.** A process according to claim 1, 2 or 3, characterized in that step (c) is carried out in an alkaline medium.

**7.** A process according to claim 6, characterized in that step (c) is carried out at a pH above 13.

8. A process according to any of the claims 1-5, characterized in that the metal is gallium.

9. A process according to any of the claims 1-3 and 5-6, characterized in that the metal is germanium or antimony.

10. A process according to any of the claims 1-3, characterized in that the metal is indium or platinum.

**Patentansprüche**

1. Verfahren zum Abtrennen eines Metalls, das einen Komplex mit 8-Hydroxychinolin bildet aus einer wäßrigen Lösung, die das Metall enthält, umfassend folgende Stufen:
   (a) das Inbetührungbringen der wäßrigen Lösung mit einer organischen flüssigen oder festen Phase, die ein Extraktionsmittel enthält, das zusammengesetzt ist einerseits aus einem aktiven Bestandteil, bestehend aus subsituiertem 8-Hydroxychinolin oder einem Gemisch von substituierten 8-Hydroxychinolinen und andererseits aus Nebenprodukten der Herstellung des Extraktionsmittels, wobei das Inberührungbringen bei einem solchen pH erfolgt, daß mindestens ein Teil des Metalls von der wäßrigen Lösung in die organische Phase überführt wird, wobei eine wäßrige, an dem Metall verarmte Lösung und eine organische, mit dem Metall beladene Phase entstehen;
   (b) die Trennung der wäßrigen an dem Metall verarmten Lösung von der organischen mit dem Metall beladenen Phase;
   (c) die Rückgewinnung des Metalls aus der organischen beladenen Phase; und
   (d) in Stufe (a) die Wiederverwendung der organischen Phase, die im Stufe (c) entladen worden ist;
   wobei dieses Verfahren dadurch gekennzeichnet ist, daß das Extraktionsmittel mindestens 90 Gew.-% des aktivem Bestandteils enthält.

2. Verfahren nach Anspruch 1, dadurch gekennzeichnet, daß das Extraktionsmittel eine Standardbeladungskapazität an Kupfer von mindestens 0.9 g Cu /10 g Extraktionsmittel hat, was bedeutet, daß 1 Liter organischer Phase, die durch Verdünnen von 50 g Extraktionsmittel und 250 ml Isodecanol in Kerosin hergestellt wird, und zuerst 2mal für 2 Minuten mit 1 Liter Schwefelsäure mit 200 g/l und anschließend 2mal für 2 Minuten mit 1 Liter entionisiertem Wasser gewaschen wird, mit mindestens 4.5 g Cu beladen ist, wenn es 3mal für 2 Minuten mit 1 Liter Kupfersulfatlösung mit 21.6 g/l $CuSO_4.5H_2O$ in Berührung gebracht wird, dessen pH zuvor auf 4 eingestellt worden ist.

3. Verfahren nach Anspruch 1 oder 2, dadurch gekennzeichnet, daß das (die) substituierte(n) 8-Hydroxychinolin(e) die Formel

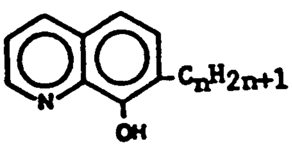

hat (haben), in der n zwischen 5 und 15 liegt.

4. Verfahren nach Anspruch 1, 2 oder 3, dadurch gekennzeichnet, daß die Stufe (a) in alkalischem Milieu erfolgt.

5. Verfahren nach Anspruch 4, dadurch gekennzeichnet, daß die Stufe (a) bei einem pH über 13 erfolgt.

6. Verfahren nach Anspruch 1, 2 oder 3, dadurch gekennzeichnet, daß die Stufe (c) in alkalischem Milieu erfolgt.

7. Verfahren nach Anspruch 6, dadurch gekennzeichnet, daß die Stufe (c) bei einem pH über 13 erfolgt.

8. Verfahren nach den Ansprüchen 1 bis 5, dadurch gekennzeichnet, daß das Metall Gallium ist.

**9.** Verfahren nach den Ansprüchen 1 bis 3 und 5 bis 6, dadurch gekennzeichnet, daß das Metall Germanium oder Antimon ist.

**10.** Verfahren nach den Ansprüchen 1 bis 3, dadurch gekennzeichnet, daß das Metall Indium oder Platin ist.